# EUROPEAN PATENT SPECIFICATION

(11) **EP 2 784 641 B1**
(45) Date of publication and mention of the grant of the patent: **28.11.2018**
(21) Application number: 12851947.7
(22) Date of filing: 10.07.2012
(51) Int. Cl.: G08C 17/00, H04L 29/08, H04N 21/47, H04N 21/643, H04N 5/44, G06F 3/048, H04N 21/422

(54) **USER INTERFACE DISPLAY METHOD AND DEVICE USING SAME**
BENUTZERSCHNITTSTELLENANZEIGEVERFAHREN UND DIESES VERFAHREN VERWENDENDE VORRICHTUNG
PROCÉDÉ D'AFFICHAGE D'INTERFACE UTILISATEUR ET DISPOSITIF L'UTILISANT

(30) Priority: 24.11.2011 US 201161563602 P; 25.11.2011 US 201161563607 P
(43) Date of publication of application: 01.10.2014
(73) Proprietor: LG Electronics Inc., Yeongdeungpo-gu Seoul 150-721 (KR)
(72) Inventor: SHIN, Yonghwan, Seoul 137-724 (KR); KO, Hyun, Seoul 137-724 (KR)
(74) Representative: Beyer, Andreas
(86) International application number: PCT/KR2012/005452
(87) International publication number: WO 2013/077524

(56) References cited:
- JP-A- 2010 501 928
- JP-A- 2011 528 146
- KR-A- 20080 074 384
- KR-A- 20110 032 596
- US-A1- 2005 007 344
- US-A1- 2008 243 998
- US-A1- 2010 235 428
- US-A1- 2011 242 268
- US-A1- 2011 267 291

## Description

### TECHNICAL FIELD

The present disclosure relates to a contents sharing method that transmits AV data being played in a server device into a client device to play the transmitted AV data therein.

### BACKGROUND ART

As a digital TV having more excellent signal processing and storing abilities than a typical analog TV and a wire/wireless network technology are developed and commercialized, various kinds of contents services such as real-time broadcasting, Contents on Demand (COD), games, news, and video communication are provided to users via an internet network connected to each home in addition to typical electronic wave media.

An example of a contents service, provided via an internet network, may include an Internet Protocol TV (IPTV). The IPTV refers to transmitting various information services, video contents, and broadcasts via a high-speed internet network to provide them to a TV user.

Additionally, an image display device such as a digital TV is connected to an external image display device such as another TV, a smart phone, a PC, or a tablet via a wire/wireless network, so that contents being played or stored in the image display device may be shared with the external image display device.

US 2005/007344 discloses a method and system for synchronizing the virtual and physical mouse cursors of a local computer and a remotely controlled computer. Video signals generated by a host computer are transmitted to a client computer in order to allow the user of a client computer to have a virtual presence on the host computer. However, the signals transmitted by the host computer may contain errors that can cause a physical mouse to lose synchronization with a virtual mouse. Therefore this virtual presence architecture uses USB protocol and human interface descriptors that support the movement of a mouse to an absolute position in order to synchronize a virtual mouse cursor with a physical mouse cursor.

US 2008/243998 discloses a remote control apparatus and method. The remote control apparatus includes a user interface server which transmits a UI having a multimedia data format, and a UI client which displays the UI, receives a user command and controls the UI server according to the received user command. The remote control method includes enabling a UI server to transmit a UI having a multimedia data format to a UI client, enabling the UI client to display the UI, and enabling the UI client to control the UI server by transmitting a user command received through the UI to the UI server.

### DISCLOSURE OF THE INVENTION

### TECHNICAL PROBLEM

Embodiments provide a method for effectively displaying a User Interface (UI) according to a user input when contents are shared between a server device and a client device, and a device using the same.

### TECHNICAL SOLUTION

The present invention describes a method for displaying a graphical user interface on a client device, as further defined in claim 1, and a client device, as further defined in claim 9.

The details of one or more embodiments are set forth in the accompanying drawings and the description below. Other features will be apparent from the description and drawings, and from the claims.

### ADVANTAGEOUS EFFECTS

According to an embodiment, since a client device autonomously generates a user interface and displays it on a screen, a time delay between a server device and the client device may be reduced, and thus, a user's convenience may be improved.

### BRIEF DESCRIPTION OF THE DRAWINGS

Fig. 1 is a block diagram illustrating a configuration of a contents sharing system according to an embodiment.
Fig. 2 is a block diagram illustrating a configuration of the server device of Fig. 1.
Fig. 3 is a block diagram illustrating a configuration of the client device of Fig. 1.
Fig. 4 is a view illustrating a method for displaying a user interface according to a user input in a server device and a client device.
Fig. 5 is a flowchart illustrating a UI displaying method according to an embodiment.
Fig. 6 is a view illustrating a method for displaying a pointer according to a mouse input of a user on the screens of a server device and a client device according to an embodiment.
Fig. 7 is a view illustrating a method for displaying a character string according to a keyboard input of a user on the screens of a server device and a client device according to an embodiment.

### MODE FOR CARRYING OUT THE INVENTION

Hereinafter, a method for displaying a UI and a device using the same according to an embodiment will be described in detail with reference to the accompanying drawings.

Embodiments of the present invention will be described with reference to the accompanying drawings and contents therein, but the present invention is not limited thereto.

The terms used in this specification are selected from currently widely used general terms in consideration of functions of the present invention, but may vary according to the intentions or practices of those skilled in the art or the advent of new technology. Additionally, in certain cases, there may be terms that an applicant may arbitrarily select, and in this case, their meanings are described below. Accordingly, the terms used in this specification should be interpreted on the basis of substantial implications that the terms have and the contents across this specification not the simple names of the terms.

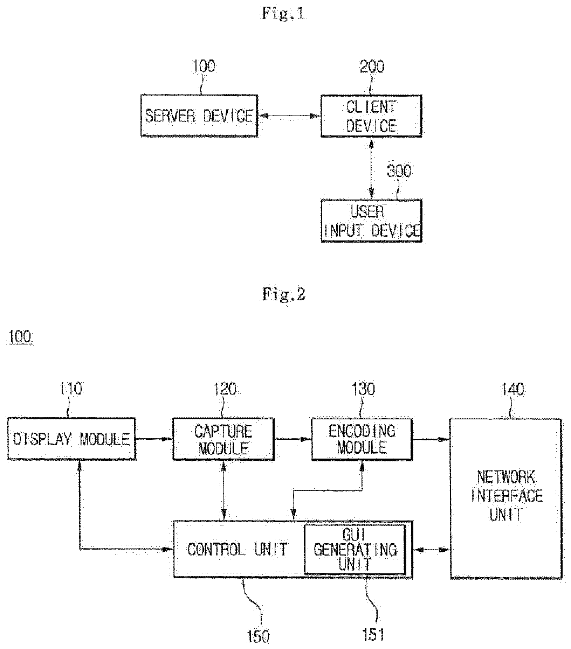

Fig. 1 is a block diagram illustrating a configuration of a contents sharing system according to an embodiment. The shown system may include a server device 100 and a client device 200.

Referring to Fig. 1, the server device 100 and the client device 200 transmit/receive AV data in connection with a wire/wireless network, so that they share specific contents.

For example, as AV data being played in the server device 100 are transmitted to the client device 200 in real time, a user plays the AV data that the server device 100 receives or stores, by using the client device 200, and controls an operation of the server device 100 by using a user input device 300 connected to the client device 200.

Moreover, an application for performing functions such as transmission/reception, playback, and control of the AV data may be installed in each of the server device 100 and the client device 200.

Additionally, the server device 100 and the client device 200 are connected to each other to transmit/receive AV data through various communication standards such as Digital Living Network Alliance (DLNA), Wireless Lan (WiFi), Wireless HD (WiHD), Wireless Home Digital Interface (WHDi), Blutooth, ZigBee, binary Code Division Multiple Access (CDMA), and Digital Interactive Interface for Video & Audio (DiiVA).

Moreover, the server device 100 and the client device 200 are connected to a media server (not shown) via a wire/wireless network such as internet, and transmit/receive contents data through the media server (not shown). As a result, they may share contents.

Moreover, the server device 100 and the client device 200 may be a digital TV (for example, a network TV, an HBBTV, or a smart TV) or various devices (for example, a PC, a notebook computer, a mobile communication terminal such as a smart phone, and a tablet PC).

Provided is an 'N-screen' service that allows various devices such as a TV, a PC, a tablet PC, and a smart phone to continuously use one content through the contents sharing system described with reference to Fig. 1

For example, a user may resume watching a broadcast or movie continuously by using another smart phone or table PC, which was watched by using a TV, and moreover, may view additional information on a drama, while watching it on a TV.

A contents file may be shared (i.e., file share) or a screen of an image display device may be shared (i.e., screen share) between the server device 100 and the client device 200 through the above 'N-screen' service.

For this, the server device 100 such as a PC may transmit contents received from an external or stored therein to the client device 200 such as a TV at the user's request through the above-mentioned communication method.

Additionally, contents that a user purchases are stored in the media server (not shown) and is downloaded from the media server via internet, so that the user may play the contents as needed in a desired image display device among the server device 100 and the client device 200.

The server device 100 and the client device 200 of Fig. 1 are wire/wirelessly connected to at least one contents source and share contents provided from the contents source.

For example, the contents source may be a device equipped in or connected to an image display device, a Network-Attached Storage (NAS), a Digital Living Network Alliance (DLNA) server, or a media server, but the present invention is not limited thereto.

Fig. 2 is a block diagram illustrating a configuration of the server device of Fig. 1. The server device 100 may include a display unit 110, a capture module 120, an encoding module 130, a network interface unit 140, and a control unit 150.

Referring to Fig. 2, the display unit 110 plays an image of AV data inputted from an external or stored therein according to the control of the control unit 150, and also the sound of the AV data may be played through a sound output unit (not shown).

The capture module 120 captures an image and sound being played in the server device 100 through the display unit 110 and the sound output unit in order to generate AV data that are to be transmitted to the client device 200.

Moreover, the encoding module 130 may encode the captured image and sound to output compressed AV data, and then, the compressed AV data outputted from the encoding module 130 may be transmitted to the client device 200 through the network interface unit 140.

The network interface unit 140 may provide an interface for connecting the server device 100 with a wire/wireless network including an internet network. For example, the network interface unit 140 may include an Ethernet terminal for an access to a wire network, and may access a wireless network for communication with the client device 200 through WiFi, WiHD, WHDi, Blutooth, ZigBee, binary CDMA, DiiVA, Wibro, Wimax, and HSDPA communication standards.

Moreover, the network interface unit 140 may receive a control signal transmitted from the client device 200, and the control signal may be a user input inputted in order to control an operation of the server device 100 through the user input device 300 connected to the client device 200 such as a keyboard, a mouse, a joystick, or a motion remote controller.

For this, the network interface unit 140 may include an access formation module (not shown) for forming a network access for communication with the client device 200, a transmission packetizing module (not shown) for packetizing the AV data outputted from the encoding module 130 according to the accessed network, and an input device signal receiving module (not shown) for receiving a control signal transmitted from the client device 200.

The control unit 150 may demultiplex a stream inputted from the network interface unit 140, an additional tuner (not shown), a demodulator, or an external device interface unit (not shown), and then, may process demultiplexed signals in order to generate and output a signal for image or sound output.

An image signal processed in the control unit 150 is inputted to the display unit 110, and then, is displayed as an image corresponding to the corresponding image signal, and a sound signal processed in the control unit 150 is outputted to a sound output unit (not shown).

For this, although not shown in Fig. 2, the control unit 150 may include a demultiplexer and an image processing unit.

Additionally, the control unit 150 may further include an input signal reflecting module (not shown) for performing an operation according to a control signal, which is received from a client device or a user input device (not shown) directly connected to the server device 100. For example, a GUI generating unit 151 may generate a graphic user interface according to the received control signal in order to display a User Interface (UI) corresponding to the user input on the screen of the display unit 110.

For example, a user input inputted through the user input device 300 may be a mouse input for moving a pointer displayed on a screen or a keyboard input for displaying a letter on a screen.

According to an embodiment, the server device 100 as shown in Fig. 2 receives a control signal corresponding to a user input for controlling an operation of the server device 100, from the client device 200, generates a UI according to the received user input to be displayed on a screen in addition to an image of AV data, and transmits information on the UI displayed on the screen in addition to the UI to the client device 200 at a predetermined time or each time a specific event occurs.

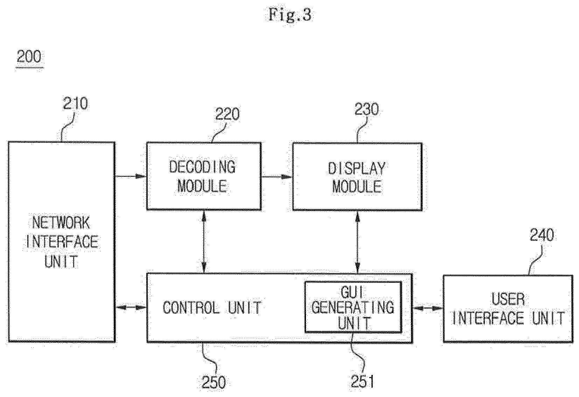

Fig. 3 is a block diagram illustrating a configuration of the client device of Fig. 1. The client device 200 may include a network interface unit 210, a decoding module 220, a display unit 230, a user interface 240, and a control unit 250.

Referring to Fig. 3, the network interface unit 210 may provide an interface for connecting the client device 200 to a wire/wireless network including an internet network, and may receive AV data from the server device 100 via the wire/wireless network.

The decoding module 220 decodes AV data received from the server device 100 through the network interface unit 210, and the decoded AV data are played through the display unit 210 and a sound output unit (not shown).

For this, the network interface unit 210 may include an access formation module (not shown) for forming a network access for communication with the server device 100, and a transmission packet parser module (not shown) for parsing the packetized AV data received from the server device 100.

Moreover, the user interface unit 240 receives a user input received from the user input device 300, and the control unit 250 transmits a control signal corresponding to the received user input to the server device 100 through the network interface unit 210 in order to control an operation of the server device 100 according to the user input from the user input device 300.

The control unit 250 may demultiplex a stream inputted from the server device 100 through the network interface unit 210, and may process the demultiplexed signals in order to generate and output the processed signals for outputting video and sound.

An image signal processed in the control unit 210 is inputted to the display unit 230, and then, is displayed as an image corresponding to a corresponding image signal, and a sound signal processed in the control unit 250 is outputted to a sound output unit (not shown).

For this, although not shown in Fig. 3, the control unit 250 may include a demultiplexer and an image processing unit.

Furthermore, as mentioned above, the client device 200 delivers a control signal corresponding to a user input received from the user input device 300 to the server device 100, and the server device 100 operates according to the delivered control signal. Then, a predetermined time delay may occur, until an image being played in the server device 100 is transmitted to the client device 200 and is reflected on a screen thereof after the operational result of the server device 100 is reflected on the screen of the display unit 110.

For example, as a network transmission delay Δ t1 (consumed for transmitting AV data from the server device 100 to the client device 200), an internal streaming process routine delay Δ t2 (consumed for processing the transmitted AV data in the network interface unit 210 of the client device 200), and an internal decoding routine delay Δ t3 (consumed for decoding the received AV data in the decoding module 220 of the client device 200) occur, a delay may occur until a control operation that an actual user inputs through the user input device 300 is reflected on the screen of the client device 200.

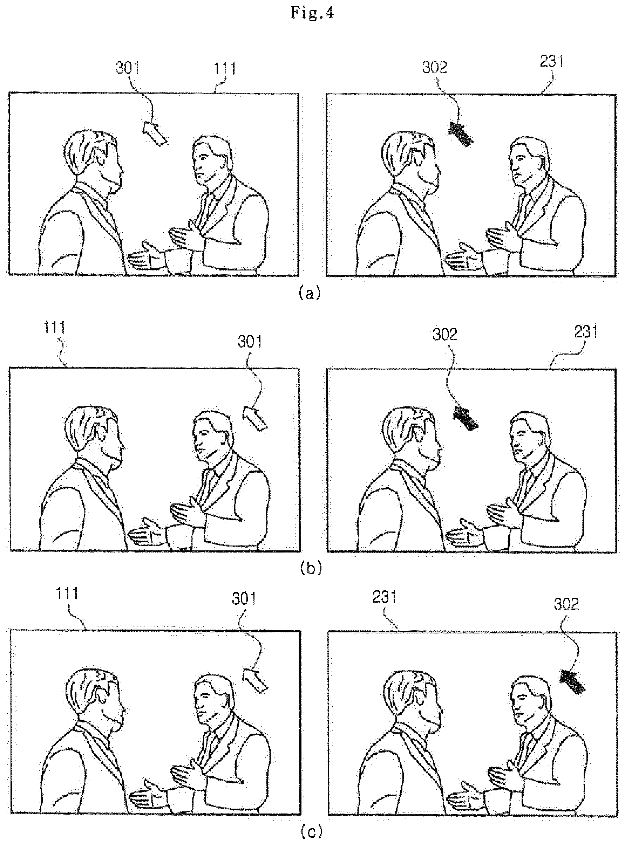

Referring to Fig. 4A, pointers 301 and 302 may be displayed on the same position of the screen 111 of the server device 100 and the screen 231 of the client device 200.

Moreover, when a user moves a mouse (not shown) connected to the client device 200 in order to move the pointer on the screen, as shown in Fig. 4B, the pointer 301 on the screen 111 of the server device 100 moves immediately according to a control signal received from the client device 200, but the pointer 302 on the screen 231 of the client device 200 may not move for a predetermined time due to the above-mentioned delay time.

Then, after a predetermined time, for example, 0.26 sec (i.e., the sum of the delay times (Δ t1+Δ t2+Δ t3)), as shown in Fig. 4C, the pointer 302 on the screen 231 of the client device 200 may move in synchronization with the position of the pointer 301 on the screen 111 of the server device 100.

A delay for displaying a UI according to the user input may make the control of a user difficult.

According to an embodiment, the client device 100 as shown in Fig. 3 receives AV data being played in the server device 100, receives a user input for controlling an operation of the server device 100, generates a UI according to the received user input to display it in addition to an image of the AV data received from the server device 100 on the screen of the client server, and transmits a control signal corresponding to the user input in addition to the displayed screen to the server device 100.

For this, the control unit 250 may further include an input signal reflecting module (not shown) for performing an operation according to a user input received from the user input device 300. For example, a GUI generating unit 251 may generate a graphic user interface according to the received control signal in order to display a UI corresponding to the user input on the screen of the client device 200 through the display unit 230.

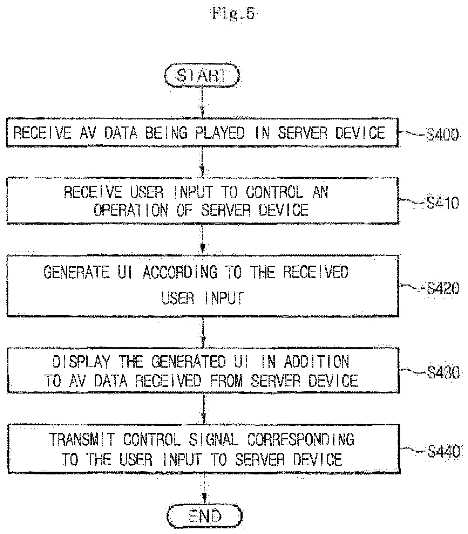

Hereinafter, embodiments for a method for displaying a UI according to the present invention will be described in more detail with reference to Figs. 5 to 7.

Fig. 5 is a flowchart illustrating a UI displaying method according to an embodiment. The UI displaying method shown in Fig. 5 will be described in linkage with the block diagrams shown in Figs. 1 to 3.

Referring to Fig. 5, the network interface unit 210 of the client device 200 receives AV data being played in the server device 100 in operation S400.

If there is a user input for controlling an operation of the server device 100 through the user input device 300 while the client device 200 plays the received AV data, the user interface unit 240 receives the user input signal fro the user input device 300 in operation S410.

In this case, the GUI generating unit 251 of the client device 200 generates a UI according to the received user input in operation S420, and displays the UI in addition to an image of the AV data received from the server device 100 on the screen in operation S430.

For example, if the user input device 300 is a mouse, the mouse receives the motion of a user for moving a pointer displayed on each of the screens of the server device 100 and the client device 200, and transmits a user input signal corresponding to the motion to the client device 200

At this point, the GUI generating unit 251 of the client device 200 generates a pointer that is moved according to the received user input signal, and the control unit 250 controls the display unit 230 in order to allow the moved pointer on the screen to be immediately displayed on the screen of the client device 200 in addition to an image of the AV data received from the server device 100.

Accordingly, a control operation through the user input device 300 may be immediately reflected on the screen of the client device 200, and thus, the delay described with reference to Fig. 4 may not be recognized.

In addition to that, the network interface unit 210 of the client device 200 transmits a control signal, which corresponds to the user input received through the user interface unit 240, to the server device 100 in operation S440.

Furthermore, the server device 100 may display a UI according to the user input on the screen by using the control signal transmitted from the client device 200.

However, the client device 200 does not display information on the UI among data received from the server device 100, and displays an UI according to the user input on the screen, which is autonomously generated by using the GUI generating unit 251 therein as described in operations S420 and S430.

According to an embodiment, the client device 200 may adjust a UI displayed on the screen by using UI information received from the server device 100 at a predetermined time or each time a specific event occurs.

That is, as mentioned above, since the UI displayed on the screen of the client device 200 is autonomously generated in the client device 200, it may be different from the UI displayed on the screen of the server device 100 in terms of a display position, form, or size.

Accordingly, the server device 100 may transmit information on the UI displayed on the screen of the server device 100 to the client device 200 at a predetermined time (for example, in a 5 sec period) or each time a specific event occurs (for example, at the end of mouse click, or character input), and the client device 200 receives the UI information through the network interface unit 210 to adjust the display position, form, or size of the UI displayed on the screen.

That is, the client device 200 autonomously generates a UI according to the user input received from the user input device 300 and displays the UI, and then receives information on the UI displayed on the screen of the server device 100 at a predetermined time or each time specific event occurs in order to synchronize the UI displayed on the screen of the client device 200 with that of the server device 100 by using the received information.

For example, the UI information received from the server device 100 may be coordinate information on a position where the UI is displayed, and in this case, the control unit 250 of the client device 200 may change a display position of the UI by using the coordinate information received from the server device 100.

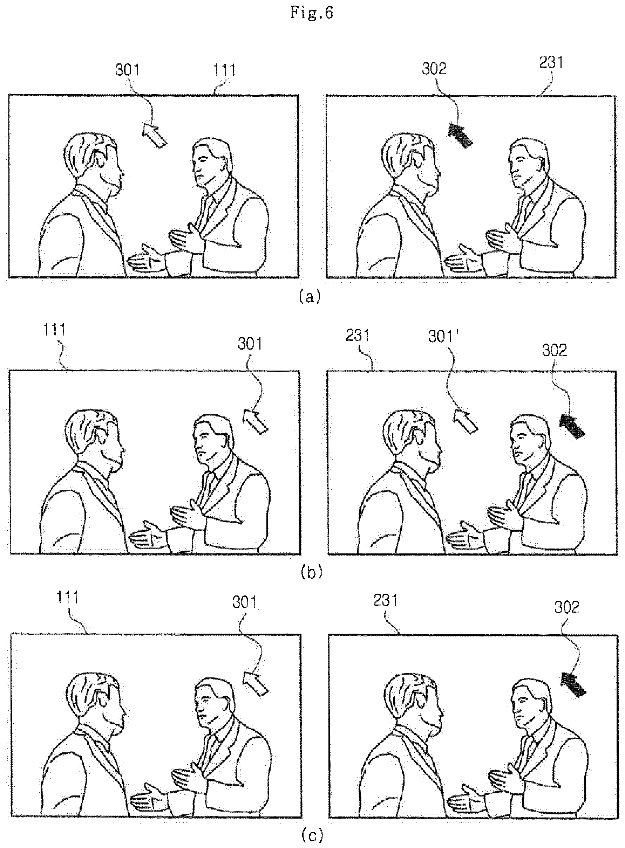

Fig. 6 is a view illustrating a method for displaying a pointer according to a mouse input of a user on the screens of the server device 100 and the client device 200 according to an embodiment.

Referring to Fig. 6A, pointers 301 and 302 may be displayed on the same position of the screen 111 of the server device 100 and the screen 231 of the client device 200.

Furthermore, when a user moves a mouse (not shown) connected to the client device 200 in order to move a pointer displayed on the screen, the control unit 250 of the client device 200 may autonomously change the pointer, i.e., the UI displayed on the screen 231, according to the mouse input.

In this case, as shown in Fig. 6A, the position of the pointer 302 displayed on the screen 231 of the client device 200 immediately is moved in correspondence to the mouse input of a user, and in addition to that, another pointer 301' in the image of the AV data transmitted from the server device 100 may be temporarily displayed on the screen 231 of the client device 200 for a short time.

Then, after a predetermined time, as shown in Fig. 6C, a pointer 302 displayed on the screen 231 of the client device 200 may be synchronized with the position of the pointer 301 displayed on the screen 111 of the server device 100.

Although the UI displaying method according to an embodiment was described with the case that the user input device 300 is a mouse, the present invention is not limited thereto, and other various user inputs are applicable.

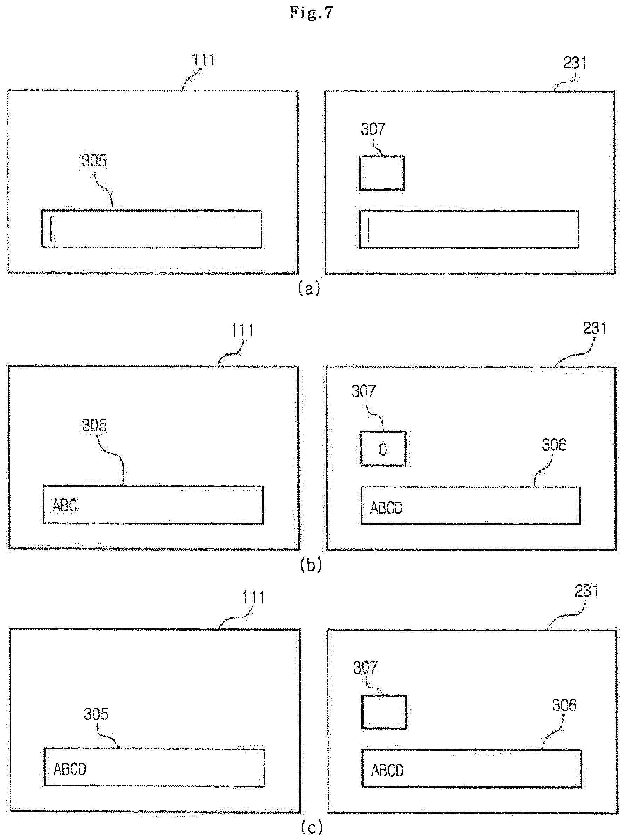

Fig. 7 is a view illustrating a method for displaying a character string according to a keyboard input of a user on the screens of a server device and a client device according to an embodiment.

Referring to Fig. 7A, character input windows 305, 306, and 307 that a user inputs characters and numbers by using a keyboard may be displayed on the screen 111 of the server device 100 and the screen 231 of the client device 200.

Furthermore, when a user uses a keyboard (not shown) connected to the client device 200 in order to input a character string of "ABCD", the control unit 250 of the client device 200 may control the display unit 130 in order to display the inputted character string on the character input windows 306 and 307 of the screen 231 according to the keyboard input.

In this case, as shown in Fig. 7B, the character string of "ABCD" may be immediately displayed on the character input windows 306 and 307 displayed on the screen 231 of the client device 200 in order to correspond to the keyboard input of the user, and different from that, only "ABC", a part of the inputted character string, may be displayed on the character input window 305 of the screen 111 of the server device 100.

This is because the client device 200 immediately displays the character string inputted through the keyboard on the screen 231 as it is, but the server device 100 displays it on the screen 111 after receiving information on the inputted character string from the client device 200.

Then, after a predetermined time, as shown in Fig. 7C, "ABCD", i.e., all of the inputted character string, may be displayed on the screen 111 of the server device 100 and the screen 231 of the client device 200.

According to another embodiment, whether to display a UI, a form, or a size according to the user input may set by a user.

Moreover, according to another embodiment, a pointer may disappear as an application is implemented, which is used when an image is captured in the server device 100 such as a PC.

For example, a cursor may disappear during image capture according to implementation in the case of game. In this case, the server device 100 generates the disappeared cursor to combine it with an image that is to be transmitted to the client device 200, or the client device 200 generates and displays the cursor by receiving coordinate information from the server device 100.

The method for displaying a UI according to an embodiment of the present invention may be programmed to be executed in a computer and may be stored on a computer readable recording medium. Examples of the computer readable recording medium include read-only memory (ROM), random-access memory (RAM), CD-ROMs, magnetic tapes, floppy disks, and optical data storage devices.

The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

## Claims

1. A method for displaying a graphical user interface on a client device (200), the method being performed by the client device (200) and comprising:
receiving AV data being played in a server device (100);
displaying the received AV data on the client device (200);
receiving a user input at the client device (200) to control an operation of the server device (100);
generating a first graphical user interface in response to the received user input for display on the client device (200);
displaying the generated first graphical user interface together with the AV data received from the server device (100);
transmitting a control signal corresponding to the user input to the server device (100); and
receiving information, from the server device (100), related to a second graphical user interface displayed on the server device (100) in response to the user input; and
synchronizing the first graphical user interface displayed on the client device (200) with the second graphical user interface displayed on the server device (100) based on the information received at the client device (200) from the server device (100) in order for the client device (200) to display the same graphical user interface of the server device (100),
wherein the first graphical user interface is displayed on the client device (200) before the information related to the second graphical user interface displayed on the server device (100) is received.

2. The method according to claim 1, wherein the server device (100) displays the second graphical user interface based on the control signal received from the client device (200).

3. The method of claim 1, wherein synchronizing the first graphical user interface includes adjusting at least one of a position, size, or format of the first graphical user interface displayed at the client device (200) to correspond to the second graphical user interface displayed at the server device (100).

4. The method of claim 3, wherein the receiving the information related to the second graphical user interface includes receiving the information at a predetermined time interval or based on a prescribed event.

5. The method according to claim 3, wherein the information received related to the second graphical user interface is coordinate information corresponding to a displayed position of the second graphical user interface on the server device (100).

6. The method of claim 5, wherein the synchronizing the first graphical user interface includes changing a position of the first graphical user interface at the client device (200) based on the coordinate information received from the server device (100).

7. The method of claim 6, wherein at least a portion of the user input is displayed at the client device (200) a prescribed amount of time before being displayed at the server device (100).

8. The method of claim 1, wherein the generating the first graphical user interface for display on the client device (200) includes determining at least one of whether to display a user interface, a format, or a size based on a preference setting stored on the client device (200).

9. A client device (200) for receiving AV data from a server device (100) for playback, comprising:
a network interface (140) for receiving AV data from the server device (100), the AV data corresponding to content being played on the server device (100);
a user interface device (240) for receiving an user input to control an operation of the server device (100);
a display (230) for displaying the AV data received from the server device (100); and a controller (250) configured to:
generate a first graphical user interface on the display (230) based on the received user input,
display the generated first graphical user interface, together with the received AV data on the display (230), and
generate a control signal corresponding to the user input,
wherein the network interface device (140) transmits the control signal corresponding to the user input to the server device (100),
wherein the controller (250) receives information, from the server device (100), related to a second graphical user interface displayed on the server device (100) in response to the control signal at predetermined intervals of time or in response to prescribed events, and
synchronizes the first graphical user interface displayed on the display (230) with the second graphical user interface displayed at the server device (100) based on the received information in order for the client device (200) to display the same graphical user interface of the server device (100),
wherein the first graphical user interface is displayed on the client device (200) before the information related to the second graphical user interface displayed on the server device (100) is received.

10. The client device (200) of claim 9, wherein the first graphical user interface displayed on the client device (200) is displayed at least a prescribed amount of time before the information related to the second graphical user interface of the server device (100) is received.

11. The client device (200) of claim 9, wherein the information related to the second graphical user interface received from the server device (100) includes coordinate information for the second graphical user interface displayed at the server device (100).

12. The client device (200) of claim 9, wherein at least a portion of the user input is displayed at the client device (200) a prescribed amount of time before being displayed at the server device (100).

## Patentansprüche

1. Verfahren zum Anzeigen einer graphischen Benutzerschnittstelle auf einem Client-Gerät (200), wobei das Verfahren von dem Client-Gerät (200) durchgeführt wird und umfasst:
Empfangen von AV-Daten, die auf einem Server-Gerät (100) abgespielt werden,
Anzeigen der empfangenen AV-Daten auf dem Client-Gerät (200),
Empfangen einer Benutzereingabe an dem Client-Gerät (200) zum Steuern eines Betriebs des Server-Gerätes (100),
Erzeugen einer ersten graphischen Benutzerschnittstelle zur Anzeige auf dem Client-Gerät (200) in Antwort auf die empfangene Benutzereingabe,
Anzeigen der erzeugten ersten graphischen Benutzerschnittstelle zusammen mit den von dem Server-Gerät (100) empfangenen AV-Daten,
Übermitteln eines der Benutzereingabe entsprechenden Steuersignals an das Server-Gerät (100), und
Empfangen von Information von dem Server-Gerät (100), die eine auf dem Server-Gerät (100) angezeigte zweite graphische Benutzerschnittstelle betrifft, in Antwort auf die Benutzereingabe, und
Synchronisieren der auf dem Client-Gerät (200) angezeigten ersten graphischen Benutzerschnittstelle mit der auf dem Server-Gerät (100) angezeigten zweiten graphischen Benutzerschnittstelle basierend auf der im Client-Gerät (200) von dem Server-Gerät (100) empfangenen Information, um das Client-Gerät (200) die gleiche graphische Benutzerschnittstelle des Server-Gerätes (100) anzeigen zu lassen,
wobei die erste graphische Benutzerschnittstelle auf dem Client-Gerät (200) angezeigt wird, bevor die die auf dem Server-Gerät (100) angezeigte zweite graphische Benutzerschnittstelle betreffende Information empfangen wird.

2. Verfahren nach Anspruch 1, bei dem das Server-Gerät (100) die zweite graphische Benutzerschnittstelle basierend auf dem von dem Client-Gerät (200) empfangenen Steuersignal anzeigt.

3. Verfahren nach Anspruch 1, bei dem das Synchronisieren der ersten graphischen Benutzerschnittstelle ein Anpassen einer Position und/oder einer Größe und/oder eines Formats der auf dem Client-Gerät (200) angezeigten ersten graphischen Benutzerschnittstelle umfasst, um der auf dem Server-Gerät (100) angezeigten zweiten graphischen Benutzerschnittstelle zu entsprechen.

4. Verfahren nach Anspruch 3, bei dem das Empfangen der die zweite graphische Benutzerschnittstelle betreffenden Information ein Empfangen der Information in einem vorbestimmten Zeitintervall oder basierend auf einem vorgegebenen Ereignis umfasst.

5. Verfahren nach Anspruch 3, bei dem die empfangene, die zweite graphische Benutzerschnittstelle betreffende Information Koordinateninformation entsprechend einer angezeigten Position der zweiten graphischen Benutzerschnittstelle auf dem Server-Gerät (100) ist.

6. Verfahren nach Anspruch 5, bei dem das Synchronisieren der ersten graphischen Benutzerschnittstelle ein Ändern einer Position der ersten graphischen Benutzerschnittstelle am Client-Gerät (200) basierend auf der von dem Server-Gerät (100) empfangenen Koordinateninformation umfasst.

7. Verfahren nach Anspruch 6, bei dem zumindest ein Teil der Benutzereingabe auf dem Client-Gerät (200) eine vorgegebene Zeitdauer angezeigt wird, bevor sie auf dem Server-Gerät (100) angezeigt wird.

8. Verfahren nach Anspruch 1, bei dem das Erzeugen der ersten graphischen Benutzerschnittstelle zur Anzeige auf dem Client-Gerät (200) ein Ermitteln umfasst, ob eine Benutzerschnittstelle und/oder ein Format und/oder eine Größe basierend auf einer in dem Client-Gerät (200) gespeicherten Präferenzeinstellung angezeigt werden soll.

9. Client-Gerät (200) zum Empfangen von AV-Daten von einem Server-Gerät (100) zur Wiedergabe, mit:
einer Netzwerkschnittstelle (140) zum Empfangen von AV-Daten von dem Server-Gerät (100), wobei die AV-Daten einem Inhalt entsprechen, der auf dem Server-Gerät (100) abgespielt wird,
einer Benutzerschnittstelleneinrichtung (240) zum Empfangen einer Benutzereingabe, um einen Betrieb des Server-Geräts (100) zu steuern,
einem Display (230) zum Anzeigen der von dem Server-Gerät (100) empfangenen AV-Daten, und
einer Steuereinheit (250), die konfiguriert ist zum:
Erzeugen einer ersten graphischen Benutzerschnittstelle auf dem Display (230) basierend auf der empfangenen Benutzereingabe,
Anzeigen der erzeugten ersten graphischen Benutzerschnittstelle zusammen mit den empfangenen AV-Daten auf dem Display (230), und
Erzeugen eines der Benutzereingabe entsprechenden Steuersignals, wobei die Netzwerkschnittstelleneinrichtung (140) das der Benutzereingabe entsprechende Steuersignal an das Server-Gerät (100) übermittelt, wobei die Steuereinheit (250) von dem Server-Gerät (100) in Antwort auf das Steuersignal in vorbestimmten Zeitintervallen oder in Antwort auf vorgegebene Ereignisse Information empfängt, die eine auf dem Server-Gerät (100) angezeigte zweite graphische Benutzerschnittstelle betreffen, und die auf dem Display (230) angezeigte erste graphische Benutzerschnittstelle mit der auf dem Server-Gerät (100) angezeigten zweiten graphischen Benutzerschnittstelle basierend auf der empfangenen Information synchronisiert, um das Client-Gerät (200) die gleiche graphische Benutzerschnittstelle des Server-Gerätes (100) anzeigen zu lassen, wobei die erste graphische Benutzerschnittstelle auf dem Client-Gerät (200) angezeigt wird, bevor die Information, die die auf dem Server-Gerät (100) angezeigte zweite graphische Benutzerschnittstelle betrifft, empfangen wird.

10. Client-Gerät (200) nach Anspruch 9, bei dem die auf dem Client-Gerät (200) angezeigte erste graphische Benutzerschnittstelle zumindest eine vorgegebene Zeitdauer angezeigt wird, bevor die die zweite graphische Benutzerschnittstelle des Server-Gerätes (100) betreffende Information empfangen wird.

11. Client-Gerät (200) nach Anspruch 9, bei dem die von dem Server-Gerät (100) empfangene, die zweite graphische Benutzerschnittstelle betreffende Information Koordinateninformation für die auf dem Server-Gerät (100) angezeigte zweite graphische Benutzerschnittstelle umfasst.

12. Client-Gerät (200) nach Anspruch 9, bei dem zumindest ein Teil der Benutzereingabe auf dem Client-Gerät (200) eine vorgegebene Zeitdauer angezeigt wird, bevor sie auf dem Server-Gerät (100) angezeigt wird.

## Revendications

1. Procédé d'affichage d'une interface utilisateur graphique sur un dispositif client (200), le procédé étant exécuté par le dispositif client (200) et comprenant :
la réception de données AV en cours de lecture dans un dispositif serveur (100) ;
l'affichage des données AV reçues sur le dispositif client (200) ;
la réception d'une entrée d'utilisateur au niveau du dispositif client (200) pour commander une opération du dispositif serveur (100) ;
la génération d'une première interface utilisateur graphique en réponse à l'entrée d'utilisateur reçue pour l'affichage sur le dispositif client (200) ;
l'affichage de la première interface utilisateur graphique générée ainsi que des données AV reçues du dispositif serveur (100) ;
la transmission d'un signal de commande correspondant à l'entrée d'utilisateur au dispositif serveur (100) ; et
la réception d'informations, à partir du dispositif serveur (100), liées à une seconde interface utilisateur graphique affichée sur le dispositif serveur (100) en réponse à l'entrée d'utilisateur ; et
la synchronisation de la première interface utilisateur graphique affichée sur le dispositif client (200) avec la seconde interface utilisateur graphique affichée sur le dispositif serveur (100) sur la base des informations reçues au niveau du dispositif client (200) à partir du dispositif serveur (100) afin que le dispositif client (200) affiche la même interface utilisateur graphique du dispositif serveur (100),
dans lequel la première interface utilisateur graphique est affichée sur le dispositif client (200) avant que les informations liées à la seconde interface utilisateur graphique affichée sur le dispositif serveur (100) soient reçues.

2. Procédé selon la revendication 1, dans lequel le dispositif serveur (100) affiche la seconde interface utilisateur graphique sur la base du signal de commande reçu du dispositif client (200).

3. Procédé selon la revendication 1, dans lequel la synchronisation de la première interface utilisateur graphique comprend le réglage d'au moins un élément parmi une position, une taille ou un format de la première interface utilisateur graphique affichée au niveau du dispositif client (200) pour correspondre à la seconde interface utilisateur graphique affichée au niveau du dispositif serveur (100).

4. Procédé selon la revendication 3, dans lequel la réception des informations liées à la seconde interface utilisateur graphique comprend la réception des informations à un intervalle de temps prédéterminé ou sur la base d'un événement prescrit.

5. Procédé selon la revendication 3, dans lequel les informations reçues liées à la seconde interface utilisateur graphique sont des informations de coordonnées correspondant à une position affichée de la seconde interface utilisateur graphique sur le dispositif serveur (100).

6. Procédé selon la revendication 5, dans lequel la synchronisation de la première interface utilisateur graphique comprend la modification d'une position de la première interface utilisateur graphique au niveau du dispositif client (200) sur la base des informations de coordonnées reçues du dispositif serveur (100).

7. Procédé selon la revendication 6, dans lequel au moins une partie de l'entrée d'utilisateur est affichée au niveau du dispositif client (200) pendant une durée prescrite avant d'être affichée au niveau du dispositif serveur (100).

8. Procédé selon la revendication 1, dans lequel la génération de la première interface utilisateur graphique pour l'affichage sur le dispositif client (200) comprend la détermination de l'affichage ou non d'une interface utilisateur, et/ou d'un format et/ou d'une taille sur la base d'un paramètre de préférence stocké sur le dispositif client (200).

9. Dispositif client (200) pour recevoir des données AV à partir d'un dispositif serveur (100) pour la lecture, comprenant :
une interface réseau (140) pour recevoir des données AV à partir du dispositif serveur (100), les données AV correspondant au contenu en cours de lecture sur le dispositif serveur (100) ;
un dispositif d'interface utilisateur (240) pour recevoir une entrée d'utilisateur pour commander une opération du dispositif serveur (100) ;
un affichage (230) pour afficher les données AV reçues du dispositif serveur (100) ; et
un contrôleur (250) conçu pour :
générer une première interface utilisateur graphique sur l'affichage (230) sur la base de l'entrée d'utilisateur reçue,
afficher la première interface utilisateur graphique générée, ainsi que les données AV reçues sur l'affichage (230), et
générer un signal de commande correspondant à l'entrée d'utilisateur,
dans lequel le dispositif d'interface réseau (140) transmet le signal de commande correspondant à l'entrée d'utilisateur au dispositif serveur (100),
dans lequel le contrôleur (250) reçoit des informations, à partir du dispositif serveur (100), liées à une seconde interface utilisateur graphique affichée sur le dispositif serveur (100) en réponse au signal de commande à des intervalles de temps prédéterminés ou en réponse à des événements prescrits, et
synchronise la première interface utilisateur graphique affichée sur l'affichage (230) avec la seconde interface utilisateur graphique affichée au niveau du dispositif serveur (100) sur la base des informations reçues afin que le dispositif client (200) affiche la même interface utilisateur graphique que le dispositif serveur (100),
dans lequel la première interface utilisateur graphique est affichée sur le dispositif client (200) avant que les informations liées à la seconde interface utilisateur graphique affichée sur le dispositif serveur (100) soient reçues.

10. Dispositif client (200) selon la revendication 9, dans lequel la première interface utilisateur graphique affichée sur le dispositif client (200) est affichée pendant au moins une durée prescrite avant que les informations liées à la seconde interface utilisateur graphique du dispositif serveur (100) soient reçues.

11. Dispositif client (200) selon la revendication 9, dans lequel les informations liées à la seconde interface utilisateur graphique reçues du dispositif serveur (100) comprennent des informations de coordonnées pour la seconde interface utilisateur graphique affichée au niveau du dispositif serveur (100).

12. Dispositif client (200) selon la revendication 9, dans lequel au moins une partie de l'entrée d'utilisateur est affichée au niveau du dispositif client (200) pendant une durée prescrite avant d'être affichée au niveau du dispositif serveur (100).
